# FASCICULE DE BREVET EUROPEEN

(11) **EP 0 725 947 B1**
(45) Date de publication et mention de la délivrance du brevet: **17.12.1997**
(21) Numéro de dépôt: 94929575.2
(22) Date de dépôt: 04.10.1994
(51) Int. Cl.: G05D 16/20

(54) **MODULE DE COMMANDE DE PRESSION DANS UN CIRCUIT HYDRAULIQUE**
MODUL ZUR DRUCKSTEUERUNG FÜR EINEN HYDRAULIKKREIS
MODULE FOR CONTROLLING THE PRESSURE IN A HYDRAULIC CIRCUIT

(30) Priorité: 29.10.1993 FR 9312912
(43) Date de publication de la demande: 14.08.1996
(73) Titulaire: Bosch Systemes de Freinage, 93700 Drancy (FR)
(72) Inventeur: KERVAGORET, Gilbert, F-95100 Argenteuil (FR)
(74) Mandataire: Bentz, Jean-Paul
(86) Numéro de dépôt international: FR9401151
(87) Numéro de publication internationale: WO9512155

(56) Documents cités:
- EP-A- 0 294 800
- EP-A- 0 452 173
- DE-A- 3 328 418

## Description

La présente invention est du domaine des systèmes de commande et de régulation de la pression dans des circuits hydrauliques, et concerne plus particulièrement un module pouvant être utilisé dans de tels systèmes.

Dans la plupart des installations hydrauliques, il est nécessaire de faire varier la pression hydraulique dans un dispositif récepteur de pression, en réponse à un signal de commande. Le récepteur de pression peut être constitué par exemple par un vérin hydraulique ou par un moteur hydraulique, et le signal de commande peut être par exemple mécanique, hydraulique ou électrique.

Les documents EP-A-0 369 412 et GB-A-2 215 416 décrivent de tels modules de commande de pression hydraulique, dans lesquels le récepteur de pression est un moteur de frein de véhicule automobile et le signal de commande est électrique. Ces systèmes présentent l'inconvénient majeur d'une consommation électrique très importante.

On a proposé, dans le document EP-A-0 452 173 un module de commande de pression dans un circuit hydraulique comprenant un générateur de fluide sur pression, un réservoir de fluide sous basse pression et un récepteur de pression, le module incluant une électrovalve comportant une bobine électrique et un noyau magnétique mobile commandant la position d'un tiroir coulissant dans un alésage formé dans un corps, l'alésage communiquant avec un conduit d'alimentation relié au générateur de fluide sous pression, un conduit de distribution relié au récepteur de pression et un conduit de détente relié au réservoir de fluide sous basse pression, le tiroir comprenant une enceinte hydraulique déterminant une force de réaction s'opposant à la force engendrée par la bobine, et le conduit de distribution étant sélectivement mis en communication avec le conduit d'alimentation ou avec le conduit de détente par le tiroir distributeur.

Un tel module, grâce à l'utilisation d'une électrovalve proportionnelle et d'une enceinte hydraulique de réaction, permet de réduire de façon considérable la consommation électrique de l'électrovalve du module de commande. Cependant, ce module se trouve inadapté pour certaines applications comme par exemple des circuits hydrauliques de volume important, où le module doit commander des débits importants de fluide sous pression élevée. Dans l'exemple d'application mentionné plus haut, un tel cas se présente lorsque le module commande le freinage hydraulique d'un véhicule utilitaire.

La présente invention a par conséquent pour objet de proposer un module de commande de la pression dans un circuit hydraulique dont la consommation électrique soit aussi réduite que possible, qui puisse assurer des débits importants de fluide sous pression élevée, et dont le fonctionnement soit fiable, la conception de ce module étant par ailleurs simplifiée de façon à obtenir un coût réduit.

Ce but est atteint, selon l'invention, en disposant une soupape pilotée délivrant le fluide sous pression issu du générateur dans le conduit d'alimentation lorsque le noyau magnétique mobile actionne le tiroir distributeur.

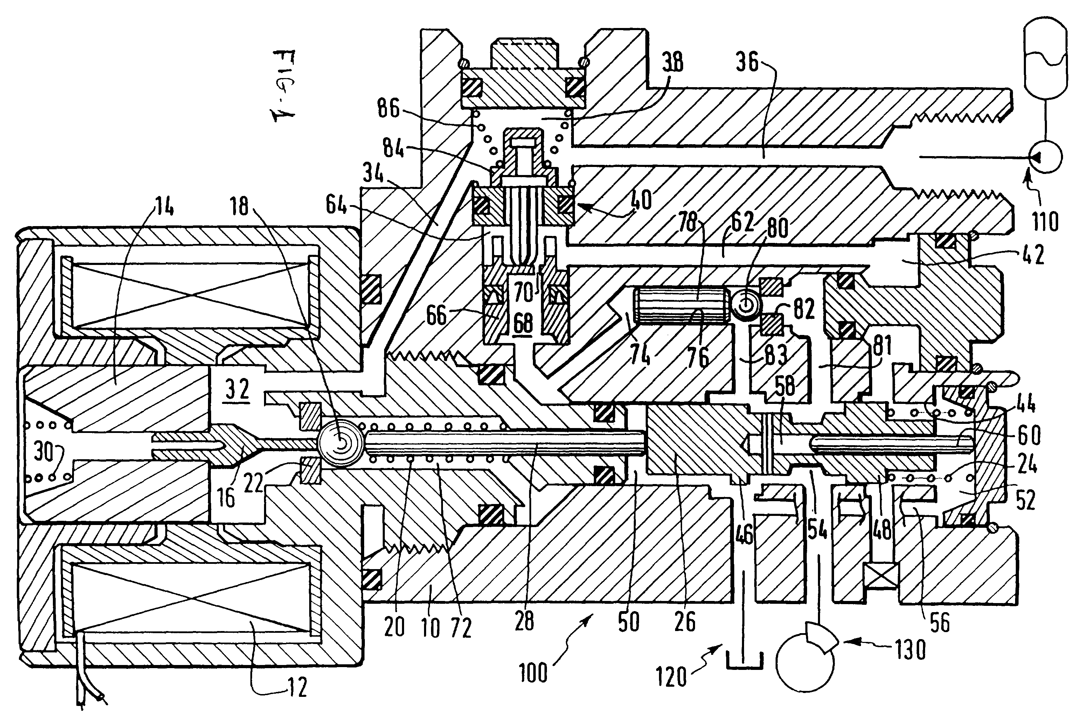

D'autres buts, caractéristiques et avantages de la présente invention ressortiront de la description qui va maintenant être faite d'un exemple de réalisation donné à titre non limitatif, en référence au dessin annexé sur lequel :
- La Figure Unique représente schématiquement en coupe un mode de réalisation d'un module de commande conforme à la présente invention.

On voit sur la Figure une coupe schématique d'un module de commande, désigné dans son ensemble par la référence 100, disposé dans un circuit hydraulique comprenant un générateur de fluide sous pression 110, un réservoir de fluide sous basse pression 120 et un récepteur de pression 130.

Le module 100 est constitué d'un corps 10 sur lequel est fixé de façon étanche une bobine 12 d'électrovalve, du type proportionnel. On sait que la bobine des électrovalves de ce type présente la caractéristique essentielle de pouvoir fournir un effort sensiblement constant pour un courant déterminé dans une plage de déplacement du noyau magnétique non négligeable, de l'ordre de par exemple 2 à 3 mm. Cette caractéristique est mise à profit dans la présente invention pour assurer la fonction requise par modulation du courant circulant dans la bobine 12.

La bobine 12 coopère avec un noyau magnétique mobile 14 muni d'un poussoir 16 pour ouvrir ou fermer un clapet à bille 18, normalement fermé au repos sous l'action d'un ressort 20 et en appui étanche contre un siège de clapet 22.

Le clapet à bille 18 est d'autre part également sollicité dans la position fermée de repos par un second ressort 24 en appui sur un tiroir de distributeur 26, lui même en appui sur une tige 28 portant sur la bille 18. Le tiroir 26 est ainsi toujours en contact avec la tige 28.

Le noyau 14 et le poussoir 16 sont par ailleurs sollicités vers la bille 18, dans le sens de l'ouverture du clapet à bille 18, par un ressort 30, de façon à ce que le poussoir 16 soit toujours en contact avec la bille 18.

Lorsque la bille 18 repose sur son siège 22, elle délimite autour du poussoir 16 une enceinte 32 communiquant en permanence avec la le générateur de pression de pression 110 par un circuit comprenant des conduits 34 et 36 et une chambre 38 d'une soupape pilotée désignée dans son ensemble par la référence 40.

La précontrainte au repos du ressort 20 est supérieure à la précontrainte au repos du ressort 30 augmentée de la force engendrée par la pression maximale du générateur 110 agissant sur la surface de la bille 18 délimitée par le siège 22. De la sorte, on est assuré que le clapet à bille 18 est toujours fermé au repos, quelle que soit la pression délivrée par le générateur 110.

Le tiroir de distributeur 26 est conçu pour ouvrir ou fermer une communication entre le récepteur de pression 130, le réservoir 120 et une chambre 42 formée dans le corps 10, conformément aux systèmes de régulation de pression hydraulique généralement utilisés. Pour ce faire, le tiroir 26 coulisse dans un alésage 44 du corps 10 et comporte deux portées 46 et 48 délimitant dans l'alésage 44 trois volumes, 50 et 52 de part et d'autre du tiroir 26 et 54 entre les deux portées.

Les volumes 50 et 52 communiquent en permanence entre eux, grâce à un conduit 56, et avec le réservoir sous basse pression 120. Le volume 54 communique en permanence avec le récepteur de pression 130 et avec un alésage borgne 58 formé axialement dans le tiroir 26, constituant une chambre de réaction créant une force de réaction s'opposant à la force agissant sur le noyau 14 comme on le verra plus loin. Cet alésage borgne est fermé de façon sensiblement étanche par une aiguille 60 en appui sur le corps 10.

La chambre 42 communique par un conduit 62 avec une deuxième chambre 64 de la soupape 40 qui est pilotée par un piston 66 séparant la deuxième chambre 64 d'une chambre de commande 68, mais présentant un restricteur de débit 70 entre ces deux chambres 64 et 68.

La chambre 68 communique avec l'espace 72 situé autour de la tige 28 et comprenant le ressort 20, cet espace étant susceptible d'être mis en communication avec l'enceinte 32 lors de l'ouverture du clapet à bille 18, et communique également avec une chambre 74 formée dans un alésage 76 du corps 10.

La chambre 74 est délimitée par un piston 78 coulissant dans l'alésage 76 et susceptible de solliciter une bille 80 contre un siège 82 pour ouvrir ou fermer la communication entre un conduit 81 relié au récepteur de pression 130 et un conduit 83 relié au réservoir sous basse pression 120.

Le module de commande qui vient d'être décrit fonctionne de la façon suivante.

Au repos, tous les éléments occupent la position représentée sur la Figure, et la pression engendrée par le générateur de pression 110 et présente dans les conduits 36 et 34, et dans les chambres 38 et 32. Dans la chambre 38, cette pression confirme la fermeture d'un clapet 84 de la soupape pilotée 40, déjà soumis à l'action d'un ressort 86. Dans la chambre 32, on a vu que cette pression est insuffisante pour ouvrir le clapet à bille 18. Tous les autres volumes et conduits du corps 10 décrits plus haut sont donc à la pression du réservoir à basse pression 120, et en particulier le récepteur de pression 130.

Lorsque la bobine 12 et parcourue par un courant d'intensité suffisante, elle engendre une force agissant sur le noyau 14 et le poussoir 16, et donc sur la bille 18. Lorsque cette force est suffisante pour vaincre la somme des précontraintes des ressorts 20 et 24, la bille 18 quitte son siège 22, et la pression du générateur 110 s'installe dans l'espace 72, dans la chambre 74, causant ainsi la fermeture du clapet 80 sur son siège 82 par l'intermédiaire du piston 78, et dans la chambre 68, faisant ainsi se déplacer le piston 66 qui soulève le clapet 84.

La pression dans la chambre 38 peut donc se transmettre à la chambre 42 par le conduit 62.

Le mouvement d'ouverture du clapet 18 a d'autre part été transmis par la tige 28 au tiroir 26. On voit que la tige 28 coulisse de façon étanche dans le corps 10 pour assurer la séparation entre le volume 50, en permanence à la basse pression du réservoir 120, et l'espace 72, où règne maintenant la haute pression du générateur 110. De façon à ne pas introduire de discontinuité dans les forces en présence, on pourra avantageusement donner à la tige 28 un diamètre égal à celui du siège de clapet 22.

Dans une première phase du déplacement du tiroir 26 provoqué par l'ouverture du clapet 18, la portée 48 du tiroir 26 se déplace et interrompt la communication entre la chambre 42 et la chambre 52, et la portée 46 est corrélativement déplacée et interrompt la communication entre le volume 54 et le conduit 83. Le volume 54, relié en permanence au récepteur de pression 130, est donc ainsi isolé des volumes 50 et 52, reliés en permanence au réservoir à basse pression 120.

Dans une deuxième phase, le courant augmentant dans la bobine 12 entraîne un déplacement supplémentaire du tiroir 26, faisant se déplacer la portée 48 qui met alors en communication la chambre 42 avec le volume 54, et donc avec le récepteur de pression 130. Il se produit alors une élévation de pression dans le récepteur 130, et simultanément dans la chambre de réaction 58, cette pression créant une force de réaction s'opposant au déplacement du tiroir 26.

Dans une troisième phase de fonctionnement, si on fait décroître le courant circulant dans la bobine 12, la force agissant sur le tiroir 26 diminue. Celui-ci étant soumis à la force exercée par le ressort 24 et à la réaction hydraulique dans la chambre 58, se déplace de telle façon que la portée 48 vienne interrompre la communication entre la chambre 42 et le volume 54, puis que la portée 46 ouvre la communication entre le volume 54 et le conduit 83, permettant ainsi une détente de la pression dans le récepteur 130, ainsi que dans la chambre de réaction 58.

On voit alors qu'en modulant, par exemple par découpage, le courant circulant dans la bobine 12, le tiroir 26 va prendre une position qui est fonction de la pression régnant dans la chambre 58, représentative de la pression régnant dans le récepteur de pression 130. On peut ainsi asservir la pression hydraulique dans le récepteur 130 au courant de commande circulant dans la bobine 12.

De plus, le module de commande de l'invention permet d'assurer des débits de fluide relativement importants vers le récepteur 130. En effet, en même temps que la bobine 12 commande la position du tiroir 26, et comme on l'a vu la pression dans le récepteur 130, elle libère la pression du générateur 110 dans l'espace 72 et dans la chambre 68, pour piloter le clapet 84 de la soupape 40, qui à son tour libère la pression du générateur 110 dans la chambre 42.

La soupape pilotée 40 agit donc comme un étage amplificateur de débit, pour le tiroir 26 agissant comme un étage de modulation de pression. Une telle séparation des fonctions débit et pression permet d'obtenir les débits élevés requis.

D'autre part, lorsque des pressions très élevées sont atteintes dans le récepteur 130, c'est à dire voisines de la pression fournie parle générateur 110, les pressions dans les chambres 68 et 64 sont également voisines l'une de l'autre, et leur différence peut ne plus être suffisante pour vaincre la force du ressort 86. Dans un tel cas, le clapet 84 se referme. Cependant, un débit de fluide en direction du récepteur 130 reste possible, par l'intermédiaire du restricteur de débit 70, entre l'espace 72, relié à ce moment au générateur 110, et la chambre 42, reliée au récepteur 130.

Dans les phases de fonctionnement qui ont été décrites plus haut, le clapet 80 reste fermé puisque le piston 78 présente dans la chambre 74 une surface supérieure à celle de la bille 80 délimitée par le siège 82 dans le conduit 81, et de plus exposée à une pression supérieure.

Lorsque l'on désire ne plus faire fonctionner le récepteur de pression 130, l'alimentation électrique dans la bobine 12 est interrompue. Le noyau 14 et le poussoir 16 reviennent alors dans leur position de repos, autorisant la fermeture du clapet 18 sous l'action des ressorts 22 et 24, et l'isolement de l'espace 72 par rapport à la source de pression 110. Le tiroir 26 reprend également sa position de repos représentée sur la Figure.

La pression régnant éventuellement dans le récepteur de pression 130 peut ainsi décroître par la mise en communication du volume 54 avec le conduit 83 relié au réservoir sous basse pression 120. La pression dans l'espace 72 décroît également car cet espace communique avec le réservoir 120 par la chambre 68, le restricteur 70, la chambre 64, le conduit 62, la chambre 42, le volume 52 et le conduit 56.

Dans l'hypothèse où le tiroir 26 resterait bloqué ou "collé" dans la position correspondant à la deuxième phase décrite ci-dessus, toute pression résiduelle dans le récepteur 130 peut néanmoins être éliminée.

En effet, cette pression résiduelle est alors présente dans le conduit 81 et s'exerce sur la surface de la bille 80 délimitée par le siège 82. Cette pression résiduelle est également présente dans la chambre 42, le conduit 62 et la chambre 64. D'autre part, lors de la fermeture du clapet 18, ce dernier laisse subsister dans l'espace 72 la pression issue du générateur 110. Cette pression est également présente dans les chambres 68 et 74. Dans cette hypothèse de blocage du tiroir 26, la fermeture du clapet 18 est assurée grâce au choix de la précontrainte du ressort 20 comme on l'a expliqué plus haut.

Les chambres 68 et 64 communiquant entre elles par l'intermédiaire du restricteur de débit 70, et la pression dans la chambre 68 étant supérieure à la pression dans la chambre 64, le restricteur de débit 70 permet une décroissance de pression dans la chambre 68. Cette décroissance de pression se produit également dans la chambre 74, qui résulte en une décroissance de la force appliquée sur la bille 80 par le piston 78.

La bille 80 peut alors se soulever de son siège 82, mettant ainsi en communication les conduits 81 et 83, et par conséquent le récepteur de pression 130 et le réservoir à basse pression 120. Toute pression résiduelle dans le récepteur de pression 130 est ainsi annihilée.

On a donc bien réalisé un module de commande générant une pression hydraulique proportionnelle au courant électrique de commande. Ce module ne présente de plus aucun seuil de fonctionnement. En effet, on a vu qu'en position de repos, c'est à dire en l'absence de tout courant électrique de commande, le tiroir 26 est soumis à la seule pression du réservoir à basse pression 120. Tout risque de "collage" au démarrage de ce tiroir est ainsi évité. Le module autorise par sa conception en deux étages des débits de fluide importants sous pression élevée, un étage commandant la pression tandis que l'autre commande le débit. Son fonctionnement est fiable puisque, quelles que soient les circonstances, si aucun courant ne circule dans la bobine 12, aucune pression n'est transmise au récepteur 130. Enfin, la fabrication est relativement simplifiée puisque le tiroir 26 est le seul composant nécessitant un usinage précis

## Revendications

1. Module de commande de pression dans un circuit hydraulique comprenant au moins un générateur de fluide sous pression (110), au moins un réservoir de fluide sous basse pression (120), et au moins un récepteur de pression (130), le module incluant une électrovalve comportant une bobine électrique (12) et un noyau magnétique mobile (14) commandant la position d'un tiroir distributeur (26) coulissant dans un alésage (44) formé dans un corps (10), l'alésage (44) communiquant avec un conduit d'alimentation (42,62) relié au générateur de fluide sous pression (110), un conduit de distribution (81) relié au récepteur de pression (130) et un conduit de détente (83) relié au réservoir de fluide sous basse pression (120), caractérisé en ce que le module comporte une soupape pilotée (40) délivrant le fluide sous pression issu du générateur (110) dans le conduit d'alimentation (42,62) lorsque le noyau magnétique mobile (14) actionne le tiroir distributeur (26).

2. Module de commande selon la revendication 1, caractérisé en ce que la soupape pilotée comporte une chambre de commande (68) et une deuxième chambre (64) communiquant avec le conduit d'alimentation (42,62).

3. Module de commande selon la revendication 2, caractérisé en ce que la chambre de commande (68) et la deuxième chambre (64) sont délimitées par un piston (66).

4. Module de commande selon la revendication 3, caractérisé en ce que le noyau magnétique mobile (14) agit sur le tiroir distributeur (26) par l'intermédiaire d'un clapet (18) coopérant avec un siège (22) et commandant une communication entre le générateur de fluide sous pression (110) et la chambre de commande de la soupape pilotée (40).

5. Module de commande selon la revendication 4, caractérisé en ce que le clapet (18) est soumis à une force de rappel exercée par au moins un ressort (20), dont la précontrainte au repos est supérieure à la force exercée par le fluide sous pression du générateur (110) sur la surface du clapet (18) délimitée par le siège (22).

6. Module de commande selon la revendication 1, caractérisé en ce qu'il comporte en outre un clapet (80) coopérant avec un siège (82), et commandé par un piston (78).

7. Module de commande selon la revendication 6, caractérisé en ce que le piston (78) délimite une chambre (74) communiquant avec la chambre de commande (68) de la soupape pilotée (40).

8. Module de commande selon la revendication 3, caractérisé en ce que le piston (66) comporte un restricteur de débit (70) entre la chambre de commande (68) et la deuxième chambre (64).

9. Module de commande selon l'une quelconque des revendications précédentes, caractérisé en ce que le tiroir (26) comporte une chambre de réaction (58) fermée de façon sensiblement étanche par une aiguille (60) en appui sur le corps (10).

## Patentansprüche

1. Steuermodul für den Druck in einem Hydraulikkreis, mit wenigstens einem Druckfluidgenerator (110), wenigstens einem Niederdruckfluidvorratsbehälter (120) und wenigstens einem Druck-Empfänger (130), wobei das Modul ein Elektroventil enthält, das eine elektrische Spule (12) und einen beweglichen Magnetkern (14) aufweist, der die Stellung eines Verteilschiebers (26) steuert, der in einer in einem Körper (10) gebildeten Bohrung (44) gleitet, wobei die Bohrung (44) mit einer Versorgungsleitung (42, 62) in Verbindung steht, die mit dem Druckfluidgenerator (110) verbunden ist, sowie mit einer Verteilleitung (81), die mit dem Druck-Empfänger (130) verbunden ist, und einer Entspannungsleitung (81), die mit dem Niederdruckfluidvorratsbehälter (120) verbunden ist, dadurch gekennzeichnet, daß das Modul ein gesteuertes Ventil (40) aufweist, welches das von dem Generator (110) abgegebene Druckfluid der Versorgungsleitung (42, 62) liefert, wenn der bewegliche Magnetkern (14) den Verteilschieber (26) betätigt.

2. Steuermodul nach Anspruch 1, dadurch gekennzeichnet, daß das gesteuerte Ventil eine Steuerkammer (68) sowie eine zweite Kammer (64) aufweist, die mit der Versorgungsleitung (42, 62) in Verbindung steht.

3. Steuermodul nach Anspruch 2, dadurch gekennzeichnet, daß die Steuerkammer (68) und die zweite Kammer (64) durch einen Kolben (66) abgegrenzt sind.

4. Steuermodul nach Anspruch 3, dadurch gekennzeichnet, daß der bewegliche Magnetkern (14) auf den Verteilschieber (26) über ein Ventilelement (18) einwirkt, das mit einem Sitz (22) zusammenwirkt und eine Verbindung zwischen dem Druckfluidgenerator (110) und der Steuerkammer des gesteuerten Ventils (40) steuert.

5. Steuermodul nach Anspruch 4, dadurch gekennzeichnet, daß das Ventilelement (18) einer Rückstellkraft ausgesetzt ist, die von wenigstens einer Feder (20) ausgeübt wird, deren Vorspannung in der Ruhestellung größer als die Kraft ist, die von dem Druckfluid des Generators (110) auf die von dem Sitz (22) abgegrenzte Fläche des Ventilelementes (18) ausgeübt wird.

6. Steuermodul nach Anspruch 1, dadurch gekennzeichnet, daß es außerdem ein Ventilelement (80) aufweist, das mit einem Sitz (82) zusammenwirkt und von einem Kolben (78) gesteuert wird.

7. Steuermodul nach Anspruch 6, dadurch gekennzeichnet, daß der Kolben (78) eine Kammer (74) abgrenzt, die mit der Steuerkammer (68) des gesteuerten Ventils (40) in Verbindung steht.

8. Steuermodul nach Anspruch 3, dadurch gekennzeichnet, daß der Kolben (66) einen Begrenzer (70) für den Durchfluß zwischen der Steuerkammer (68) und der zweiten Kammer (64) aufweist.

9. Steuermodul nach einem der vorhergehenden Ansprüche, dadurch gekennzeichnet, daß der Schieber (26) eine Reaktionskammer (68) aufweist, die in im wesentlichen dichter Weise durch einen Stift (60) verschlossen ist, der sich an dem Körper (10) abstützt.

## Claims

1. Module for controlling pressure in a hydraulic circuit, comprising at least one generator of pressurized fluid (110), at least one reservoir of low pressure fluid (120), and at least one pressure receiver (130), the module including a solenoid valve including an electric coil (12) and a movable magnetic core plunger (14) controlling the position of a distributor slide valve (26) sliding in a bore (44) formed in a body (10), the bore (44) communicating with a feed passage (42, 62) connected to the generator of pressurized fluid (110), a distribution passage (81) connected to the pressure receiver (130), and a pressure relief passage (83) connected to the reservoir of low pressure fluid (120), characterized in that the module includes a controlled valve (40) delivering the pressurized fluid coming from the generator (110) into the feed passage (42, 62) when the movable magnetic core plunger (14) actuates the distributor slide valve (26).

2. Control module according to Claim 1, characterized in that the controlled valve includes a control chamber (68) and a second chamber (64) communicating with the feed passage (42, 62).

3. Control module according to Claim 2,characterized in that the control chamber (68) and the second chamber (64) are delimited by a piston (66).

4. Control module according to Claim 3, characterized in that the movable magnetic core plunger (14) acts on the distributor slide valve (26) through the use of a valve (18) interacting with a seat (22) and controlling a communication between the generator of pressurized fluid (110) and the control chamber of the controlled valve (40).

5. Control module according to Claim 4, characterized in that the valve (18) is subjected to a return force exerted by at least one spring (20), of which the prestress at rest is greater than the force exerted by the pressurized fluid from the generator (110) on the surface of the valve (18) delimited by the seat (22).

6. Control module according to Claim 1, characterized in that it furthermore includes a valve element (80) interacting with a seat (82), and controlled by a piston (78).

7. Control module according to Claim 6, characterized in that the piston (78) delimits a chamber (74) communicating with the control chamber (68) of the controlled valve (40).

8. Control module according to Claim 3, characterized in that the piston (66) includes a flow restrictor (70) between the control chamber (68) and the second chamber (64).

9. Control module according to any one of the preceding claims, characterized in that the slide valve (26) includes a reaction chamber (58) which is closed in substantially leaktight fashion by a needle (60) bearing on the body (10).
